# EUROPÄISCHE PATENTANMELDUNG

(11) **EP 1 343 316 A1**
(43) Veröffentlichungstag der Anmeldung: **10.09.2003**
(21) Anmeldenummer: 02004357.6
(22) Anmeldetag: 04.03.2002
(51) Int. Cl.: H04N 7/16, H04N 7/173, H04N 7/167

(54) **Verfahren und Vorrichtung zum Adressieren von Mitteilungen eines Anbieters digitaler Dienste**

(71) Anmelder: Beta Research GmbH, 85774 Unterföhring (DE)
(72) Erfinder: Löhmann, Ekkehard, 88236 Aulendorf (DE)
(74) Vertreter: Heselberger, Johannes

(57) **Zusammenfassung**

Die Anmeldung betrifft ein Verfahren zum Adressieren von Mitteilungen bezüglich mehrerer Dienste (x, y, z) eines Dienstanbieters an Abnehmer (1, ...,250) von Diensten (x, y, z) des Dienstanbieters, mit den Schritten:
- Einteilen der Abnehmer (1,...,250) in Abnehmergruppen (G11,...,G20), die jeweils mittels einer Abnehmergruppenadresse bezeichnet sind, und
- Adressieren einer Mitteilung an alle Abnehmer einer Abnehmergruppe (G11,...,G20).

Für jeden Abnehmer (1,...,250) werden Relevanzwerte bezüglich der verschiedenen Dienste (x, y, z) ermittelt und das Einteilen der Abnehmer (1,...,250) in Abnehmergruppen (G11,...,G20) erfolgt in Abhängigkeit der jeweils ermittelten Relevanzwerte.

## Beschreibung

Die Erfindung betrifft ein Verfahren zum Adressieren von Mitteilungen bezüglich mehrerer Dienste eines Dienstanbieters an Abnehmer von Diensten des Dienstanbieters, mit den Schritten:
- Einteilen der Abnehmer in Abnehmergruppen, die jeweils mittels einer Abnehmergruppenadresse bezeichnet sind, und
- Adressieren der jeweiligen Mitteilung an alle Abnehmer einer Abnehmergruppe.

Außerdem betrifft die Erfindung eine Rechteverwaltungsvorrichtung zum Verwalten von Rechten mehrerer Abnehmer zur Inanspruchnahme mehrerer Dienste, eine Sicherheitsvorrichtung zum Entschlüsseln verschlüsselter Daten bezüglich eines Dienstes, ein System zum Anbieten von Diensten an mehrere Abnehmer, ein digitales Speichermedium, ein Computerprogrammprodukt und ein Computerprogramm.

Das Verfahren wird bekanntermaßen beim digitalen Fernsehen angewendet. Ein Anbieter eines digitalen Fernsehdienstes stellt einem Abnehmer eine sogenannte Set-Top-Box einschließlich eines Zugriffsmoduls zum Entschlüsseln verschlüsselter Daten, die den digitalen Dienst aurweisen, und einer Prozessorkarte (Smartcard) zur Verfügung. Die Set-Top-Box ist an ein digitales Fernsehnetz angeschlossen, durch das der digitale Fernsehdienst von dem Anbieter an den Abnehmer übertragbar ist. Auf der Prozessorkarte ist eine Adresse gespeichert, unter der der Anbieter Mitteilungen an die Prozessorkarte senden kann. Diese Adresse ist auch auf Prozessorkarten anderer Abnehmer gespeichert, die in einer Abnehmergruppe zusammengefasst sind. Auf der Prozessorkarte sind ferner zur Entschlüsselung verschlüsselter Dienste erforderliche Schlüssel gespeichert, mittels derer das Zugriffsmodul die verschlüsselten Daten entschlüsselt. Ferner sind auf der Prozessorkarte Informationen über Berechtigungen des Abnehmers zur Inanspruchnahme der digitalen Fernsehdienste gespeichert. Diese Berechtigungsinformationen sind etwa für den Fall änderbar, in dem der Abnehmer einen zusätzlichen Dienst abonniert oder ein bestehendes Abonnement beendet. Eine derartige Änderung wird der Prozessorkarte mitgeteilt. Der Dienstanbieter sendet dazu eine Mitteilung, etwa eine Nachricht über eine Freischaltung eines bestimmten digitalen Fernsehdienstes, an die Prozessorkarte, indem der Dienstanbieter diese Mitteilung mit der auf der Prozessorkarte des Abnehmers gespeicherten Adresse versieht. Weil nach dem bekannten Verfahren mehrere Abnehmer in einer einzelnen Abnehmergruppe zusammengefasst sind, der eine einzige Abnehmergruppenadresse zugeordnet ist, kann eine einzige, mit der Adresse der Abnehmergruppe versehene Mitteilung die Prozessorkarten aller Abnehmer dieser Abnehmergruppe erreichen. Somit ist die Zahl der Adressen, unter denen die Mitteilungen gesendet werden, geringer als die Zahl der Abnehmer, an die die gesendeten Mitteilungen gerichtet sind.

Der Erfindung liegt die Aufgabe zugrunde, das bekannte Verfahren derart zu verbessern, dass die Anzahl der erforderlichen Mitteilungen, an die vorhandene Zahl Adressen die zur Rechteverwaltung durch das System benötigt wird, im laufenden Betrieb erheblich zu reduzieren.

Die Erfindung löst die Aufgabe mittels eines Verfahrens zum Adressieren von Mitteilungen bezüglich mehrerer Dienste eines Dienstanbieters an Abnehmer von Diensten des Dienstanbieters, mit den Schritten:
- Einteilen der Abnehmer in Abnehmergruppen, die jeweils mittels einer Abnehmergruppenadresse bezeichnet sind, und
- Adressieren der jeweiligen Mitteilung an alle Abnehmer einer Abnehmergruppe,
wobei für jeden Abnehmer Relevanzwerte bezüglich der verschiedenen Dienste ermittelt werden und das Einteilen der Abnehmer in Abnehmergruppen in Abhängigkeit der jeweils ermittelten Relevanzwerte erfolgt.

Das erfindungsgemäße Verfahren ermöglicht eine überraschend hohe Effizienz bei der Übertragung von Mitteilungen bezüglich der verschiedenen Dienste. Die Erfindung macht sich zunutze, dass - im Unterschied zu dem bekannten Verfahren - bei der erfindungsgemäßen Einteilung der Abnehmer in Abnehmergruppen in Abhängigkeit von Relevanzwerten die Wahrscheinlichkeit, dass eine Mitteilung bezüglich eines bestimmten Dienstes an die jeweilige Abnehmergruppe gesendet werden muss, nicht über alle Abnehmergruppen gleichverteilt ist.

Bei einer Ausführungsform werden die Relevanzwerte bezüglich der verschiedenen Dienste für jeden Abnehmer in Abhängigkeit der Häufigkeit ermittelt, mit der die verschiedenen Dienste von dem Abnehmer in Anspruch genommen wurden. Bevorzugt bildet diese Häufigkeit jeweils selbst den Relevanzwert. Besonders bevorzugt werden die Relevanzwerte bezüglich der verschiedenen Dienste für jeden Abnehmer in Abhängigkeit eines Nutzungsprofils des jeweiligen Abnehmers ermittelt, indem etwa bezüglich einer vorgegebenen Auswahl von Diensten die Häufigkeit festgehalten ist, mit der diese Dienste von dem Abnehmer in Anspruch genommen sind. Die relative Häufigkeit der bisherigen Inanspruchnahme der verschiedenen Dienste ist ein gutes empirisches Maß für eine Wahrscheinlichkeit, mit der der Abnehmer künftig den jeweiligen Dienst in Anspruch nehmen wird. Bevorzugt werden Abnehmer mit ähnlichem Nutzungsprofil der selben Abnehmergruppe zugeordnet. Ganz besonders bevorzugt ist eine Bildung von Abnehmergruppen, deren jeweilige Abnehmer ein gleiches oder gar identisches Nutzungsprofil aufweisen.

Bei einer Ausführungsform werden die Relevanzwerte bezüglich eines vorgegebenen Zeitraums vor dem Zeitpunkt ermittelt, zu dem die Ermittlung stattfindet. Eine Beschränkung des Zeitraums auf den vorgegebenen Wert erhöht die Aussagekraft der ermittelten Relevanzwerte bezüglich eines künftigen Inanspruchnahmeverhaltens der Abnehmer. Beim Ermitteln der Relevanzwerte bezüglich des vorgegebenen Zeitraumes wird bevorzugt ein jüngerer Abschnitt des Zeitraums stärker berücksichtigt als ein älterer Abschnitt des Zeitraums. Die Aussagekraft der so ermittelten Relevanzwerte ist besonders hoch, weil einerseits zwar eine langfristige Betrachtung der Inanspruchnahmegewohnheiten des Abnehmers gewährleistet ist, andererseits jedoch berücksichtigt wird, dass die Wahrscheinlichkeit einer Änderung der Inanspruchnahmegewohnheiten des Abnehmers umso geringer ist, je jünger der Zeitabschnitt ist, während dessen die Inanspruchnahmegewohnheiten betrachtet wurden.

Bei einer Ausführungsform des erfindungsgemäßen Verfahrens werden die Abnehmer anhand der Relevanzwerte bezüglich der verschiedenen Dienste derart in die Abnehmergruppen eingeteilt, dass eine Zahl von Abnehmergruppen mit Abnehmern maximiert ist, für die die Mitteilung bezüglich eines vorgegebenen Dienstes irrelevant ist. Die Summe der Relevanzwerte bezüglich des vorgegebenen Dienstes in Abnehmergruppen mit Abnehmern, für die die Mitteilung bezüglich des vorgegebenen Dienstes irrelevant ist, beträgt somit null. Die Wahrscheinlichkeit, dass an diese Abnehmergruppen künftig keine Mitteilung bezüglich des vorgegebenen Dienstes gesendet werden muss, ist besonders hoch.

Bei einer weiteren Ausführungsform werden die Abnehmer anhand der Relevanzwerte bezüglich der verschiedenen Dienste derart in die Abnehmergruppen eingeteilt, dass in denjenigen Abnehmergruppen mit Abnehmern, für die die Mitteilung bezüglich des vorgegebenen Dienstes relevant ist, eine Summe der Relevanzwerte bezüglich des vorgegebenen Dienstes maximiert ist. Somit ist die Wahrscheinlichkeit besonders hoch, dass die Mitteilung bezüglich des vorgegebenen Dienstes an diese Abnehmergruppen gesendet werden muss; zugleich ist die Wahrscheinlichkeit niedrig, dass diese Mitteilung auch an übrige Abnehmergruppen gesendet werden muss.

Bei einer Ausführungsform werden die Abnehmer anhand der Relevanzwerte bezüglich der verschiedenen Dienste derart in die Abnehmergruppen eingeteilt, dass eine Wahrscheinlichkeit maximiert ist, wonach die Mitteilung bezüglich eines vorgegebenen Dienstes für jeden Abnehmer in der Abnehmergruppe relevant ist. Auch bei dieser Ausführungsform ist die Wahrscheinlichkeit niedrig, dass diese Mitteilung auch an übrige Abnehmergruppen gesendet werden muss.

Besonders bevorzugt ist eine Ausführungsform des erfindungsgemäßen Verfahrens, bei der der Dienstanbieter ein Verzeichnis führt. In dieses Verzeichnis werden für jeden Abnehmer die Adresse derjenigen Abnehmergruppe, der der Abnehmer gegenwärtig zugeordnet ist, ferner gegebenenfalls die Adresse derjenigen Abnehmergruppe, der der Abnehmer zuvor zugeordnet war, und die Relevanzwerte des Abnehmers bezüglich der verschiedenen Dienste eingetragen. Beispielsweise werden diejenigen Dienste und die zugeordneten Relevanzwerte eingetragen, zu deren Inanspruchnahme der Abnehmer berechtigt ist. Falls der Abnehmer unter einer neuen Adresse nicht erreichbar ist, ist auf dem Verzeichnis auf eine einfache Weise seine ältere Adresse ermittelbar. Bei einer Ausführungsform wird das Nutzungsprofil des Abnehmers in das Verzeichnis eingetragen. Anhand des Nutzungsprofils ist eine Relevanz von Mitteilungen bezüglich der verschiedenen Dienste für den Abnehmer ermittelbar. Bei einer Ausführungsform enthält das Verzeichnis bezüglich jeder Inanspruchnahme durch die erfassten Abnehmer eine Information über den Zeitpunkt dieser Inanspruchnahme. Diese Information ermöglicht eine Gewichtung der Inanspruchnahmen derart, dass eine zum Zeitpunkt der Ermittlung des Nutzungsprofils bzw. der Relevanzwerte weiter zurückliegende Inanspruchnahme einen geringeren Einfluss auf das Nutzungsprofil bzw. den Relevanzwert hat als eine jüngere Inanspruchnahme. Eine Inanspruchnahme, die vor einem bestimmten Zeitraum vor dem Zeitpunkt der Ermittlung lag, kann gänzlich unberücksichtigt bleiben, indem etwa der Eintrag dieser Inanspruchnahme aus dem Verzeichnis gelöscht wird.

Die Erfindung löst die Aufgabe ferner mittels eines Rechteverwaltungssystems zum Verwalten von Rechten verschiedener Abnehmer zur Inanspruchnahme verschiedener Dienste, mit einer Datenverarbeitungseinrichtung mit einer Ein-/Ausgabeschnittstelle, und einer mit der Datenverarbeitungseinrichtung verbundenen Speichereinrichtung, wobei in der Speichereinrichtung ein Datenverarbeitungsprogramm zum Durchführen des erfindungsgemäßen Verfahrens gespeichert ist und die Datenverarbeitungseinrichtung zum Verarbeiten von Daten gemäß dem Datenverarbeitungsprogramm vorgesehen ist.

Die Erfindung löst die Aufgabe ferner mittels einer Sicherheitsvorrichtung zum Entschlüsseln verschlüsselter Daten bezüglich eines Dienstes, mit einer Speichereinrichtung zum Speichern einer Abnehmeradresse sowie eines Schlüssels, einem Anschluss zur Aufnahme der verschlüsselten Daten sowie zur Ausgabe entschlüsselter Daten, einer Datenverarbeitungseinrichtung zum Entschlüsseln der verschlüsselten Daten mittels des Schlüssels, um die entschlüsselten Daten zu erhalten, sofern die verschlüsselten Daten mit der Abnehmeradresse versehen sind, wobei die Speichereinrichtung zum Speichern mindestens einer zweiten Abnehmeradresse ausgebildet ist, und die Datenverarbeitungseinrichtung zum Entschlüsseln der verschlüsselten Daten mittels des Schlüssels vorgesehen ist, sofern die verschlüsselten Daten mit der zweiten Abnehmeradresse versehen sind. Die erfindungsgemäße Sicherheitsvorrichtung hat den Vorteil, dass sie unter der ersten Adresse adressierbar ist, falls der Abnehmer, etwa nach dem erfindungsgemäßen Verfahren, aktuell einer Abnehmergruppe zugeordnet ist, deren Adresse sich von der Adresse derjenigen Abnehmergruppe unterscheidet, der der Abnehmer zuvor zugeordnet war, ohne dass die aktuelle Adresse bereits in der Speichereinrichtung der Sicherheitsvorrichtung gespeichert wurde. Dies kann beispielsweise dann der Fall sein, wenn der Abnehmer seine Set-Top-Box vorübergehend außer Betrieb genommen hat, etwa während er verreist war. Insbesondere ermöglicht die Speichereinrichtung einen störungsfreien Wechsel von der ersten Adresse auf die zweite Adresse des Abnehmers. Während eines Übergangszeitraumes werden die Mitteilungen unter sowohl der ersten als auch der zweiten Adresse ausgespielt. So kann der Wechsel durch Verwendung der zweiten Adresse im Hintergrund vorbereitetet werden. Erst wenn Gewissheit darüber besteht, dass die neue Adresse eingerichtet ist, kann direkt auf die zweite Adresse umgeschaltet werden, ohne die Mitteilung noch unter der ersten Adresse auszuspielen, so dass die vorteilhafte Wirkung der Erfindung voll erreicht wird.

Bei einer Ausführungsform ist die Sicherheitsvorrichtung als Prozessorkarte (Smartcard) ausgebildet. Die Prozessorkarte ist in ein Kartenlesegerät eines Zugriffsmoduls (Conditional Access Module) eingesteckt, das eine Empfangseinrichtung zum Empfang digitaler Daten mit dem Dienst des Anbieters aufweist. Die Prozessorkarte ist dabei zur Aufnahme eines verschlüsselten Produktschlüssels vorgesehen, der mit den digitalen Daten an das Zugriffsmodul übertragen wird. Die Prozessorkarte entschlüsselt den Produktschlüssel - sofern der Produktschlüssel mit einer der in der Speichereinrichtung der Prozessorkarte gespeicherten Adressen adressiert ist - mittels des in der Speichereinrichtung gespeicherten Schlüssels und gibt den entschlüsselten Produktschlüssel an das Zugriffsmodul aus. Mittels des entschlüsselten Produktschlüssels entschlüsselt das Zugriffsmodul die digitalen Daten mit dem Dienst, so dass der Dienst vom Abnehmer in Anspruch genommen werden kann.

Die Erfindung löst die Aufgabe ferner mittels eines Systems zum Anbieten von Diensten an verschiedene Abnehmer, mit einer Dienststation zum Bereitstellen der Dienste, einem Übertragungsnetz zum Übertragen der bereitgestellten Dienste an Zugriffsmodule der mehreren Abnehmer, die zur Aufnahme einer erfindungsgemäßen Sicherheitsvorrichtung zum Entschlüsseln verschlüsselter Daten bezüglich der Dienste vorgesehen sind, und einer erfindungsgemäßen Rechteverwaltungsvorrichtung, das zum Verwalten von Rechten der Abnehmer zur Inanspruchnahme der Dienste vorgesehen ist.

Die Erfindung löst die Aufgabe ferner mittels eines digitalen Speichermediums, insbesondere einer Festplatte, mit elektronisch auslesbaren Steuersignalen, die so mit einem System zum Anbieten von Diensten an verschiedene Abnehmer zusammenwirken können, dass das erfindungsgemäße Verfahren ausgeführt wird.

Die Erfindung löst die Aufgabe ferner mittels eines Computerprogrammprodukts mit auf einem maschinenlesbaren Träger gespeichertem Programmcode zum Durchführen des erfindungsgemäßen Verfahrens, wenn das Computerprogrammprodukt auf einem Rechner abläuft.

Die Erfindung löst die Aufgabe schließlich mittels eines Computerprogramms, mit Programmcode zum Durchführen des erfindungsgemäßen Verfahrens, wenn das Programm auf einem Computer abläuft.

Nachfolgend wird ein Ausführungsbeispiel der Erfindung anhand der Figuren näher erläutert. Es zeigen:
- Fig. 1: auszugsweise eine erste Einteilung von Abnehmern in Abnehmergruppen;
- Fig. 2: eine Häufigkeit, mit der die Abnehmer in Figur 1 vorgegebene Dienste in Anspruch nehmen; und
- Fig. 3: auszugsweise eine erfindungsgemäße zweite Einteilung der Abnehmer in Figur 1 in Abnehmergruppen.

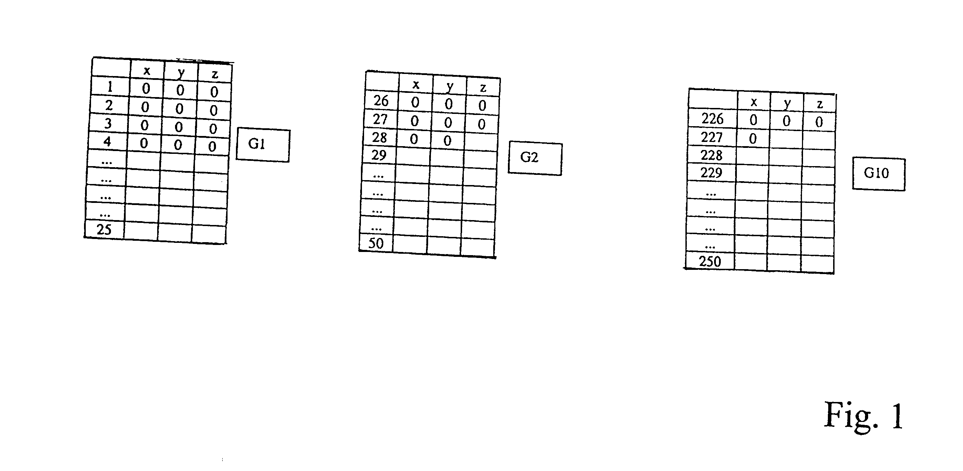

In dem in den Figuren dargestellten Ausführungsbeispiel bietet ein Dienstanbieter drei Dienste x, y, z an. Bei dem Dienstanbieter sind 250 Abnehmer (1 bis 250) registriert. Der Dienstanbieter teilt diese Abnehmer zunächst in zehn Gruppen (G1 bis G10) ein. In der Figur 1 ist die Einteilung der Abnehmer 1 bis 250 in die Abnehmergruppen G 1 bis G10 in einer Ausgangssituation auszugsweise dargestellt, indem einige Abnehmer der Abnehmergruppen G1, G2 und G10 in jeweils eine Tabelle für jede Gruppe eingetragen sind. Jede Tabelle weist je eine Spalte auf, in die bezüglich jedes Abnehmers eine Anzahl von Inanspruchnahmen der Dienste x, y bzw. z eingetragen ist. In der Ausgangssituation sind noch keine Inanspruchnahmen registriert; deshalb sind Nullen in die Tabellen eingetragen. Die Einteilung der Abnehmer 1 bis 250 in die Gruppen G1 bis G10, etwa der Abnehmer 1 bis 25 in die Gruppe G1, der Abnehmer 26 bis 50 in die Gruppe G2 u.s.w., ist zufällig.

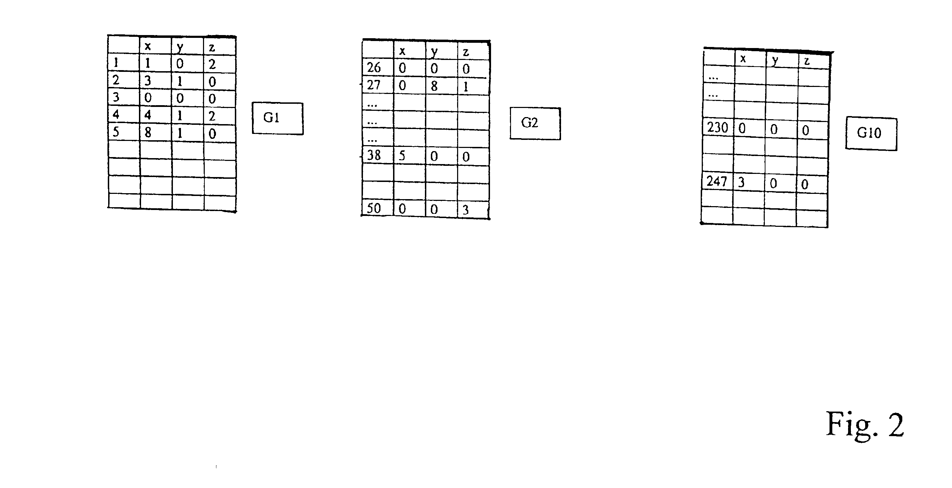

In der Figur 2 ist die Einteilung der Abnehmer 1 bis 250 in die Abnehmergruppen G1 bis G10 in einer Situation von beispielsweise zwei Monaten nach der Ausgangssituation auszugsweise dargestellt. In dieser Situation sind für einige der Abnehmer Inanspruchnahmen registriert; die Häufigkeiten der Inanspruchnahmen sind für jeden Abnehmer 1 bis 250 bezüglich jedes Dienstes x, y, z für jede Gruppe G1 bis G10 in die zugeordnete Tabelle eingetragen. Beispielsweise hat der Abnehmer 4 in der Gruppe G1 den Dienst x viermal, den Dienst y einmal und den Dienst z zweimal in Anspruch genommen. Der Abnehmer 5 in der Gruppe G1 hat den Dienst x achtmal, den Dienst y einmal und den Dienst z nicht in Anspruch genommen. Beispielsweise hat der Abnehmer 26 in der Gruppe G2 keinen der Dienste x, y, z in Anspruch genommen; ferner hat der Abnehmer 27 in der Gruppe G2 den Dienst x nicht, den Dienst y dagegen achtmal und den Dienst z einmal in Anspruch genommen. In der Gruppe G2 hat schließlich der Abnehmer 50 weder den Dienst x noch den Dienst y, aber dreimal den Dienst z in Anspruch genommen.

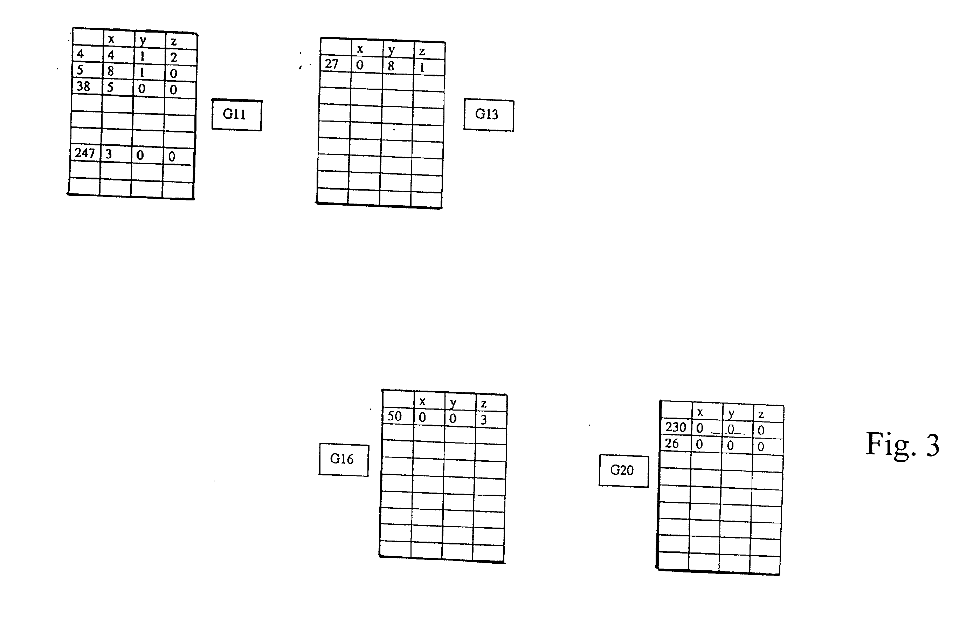

In der Figur 3 ist eine zweite Einteilung der Abnehmer 1 bis 250 in zehn Abnehmergruppen G11 bis G20 dargestellt. Diese Einteilung hat der Dienstanbieter erfindungsgemäß vorgenommen. Beispielsweise hat der Dienstanbieter in der Gruppe G11 Abnehmer zusammengefasst, die den Dienst x häufig in Anspruch genommen haben; dies sind vorliegend etwa die oben erwähnten Abnehmer 4 und 5 aus der Gruppe G1. In der Gruppe G13 hat der Dienstanbieter beispielsweise Abnehmer zusammengefasst, die den Dienst y häufig in Anspruch genommen haben; dies ist vorliegend etwa der oben erwähnte Abnehmer 27 aus der Gruppe G2. In der Gruppe G16 hat der Dienstanbieter beispielsweise Abnehmer zusammengefasst, die den Dienst z häufig in Anspruch genommen haben; dies ist vorliegend etwa der oben erwähnte Abnehmer 50 aus der Gruppe G2. In der Gruppe G20 hat der Dienstanbieter beispielsweise Abnehmer zusammengefasst, die die Dienste x, y, z nur selten nutzen. Dies ist vorliegend etwa der Abnehmer 26 aus der Gruppe G2.

Aufgrund der zweiten Einteilung der Abnehmer 1 bis 250 in die Gruppen G11 bis G20 unter Berücksichtigung des Inanspruchnahmeverhaltens dieser Abnehmer während des Zeitraums von zwei Monaten vor der zweiten Einteilung ist eine überraschend hohe Effizienz bei der Übertragung von Mitteilungen bezüglich der verschiedenen Dienste x, y, z möglich. Erfindungsgemäß sind nämlich die Abnehmer in die Abnehmergruppen G11 bis G20 in Abhängigkeit eines Nutzungsprofils bezüglich der drei Dienste x, y, z eingeteilt. Somit ist die Wahrscheinlichkeit, dass eine Mitteilung bezüglich eines bestimmten Dienstes an die jeweilige Abnehmergruppe gesendet werden muss, nicht über alle Abnehmergruppen gleichverteilt. Vielmehr ist diese Wahrscheinlichkeit etwa bezüglich des Dienstes x in der Gruppe G11 besonders hoch, so dass diese Wahrscheinlichkeit zugleich bezüglich der Gruppen G12 bis G20 besonders niedrig ist. Somit ist eine insgesamt die Wahrscheinlichkeit erhöht, dass eine Mitteilung für die Abnehmer, an die sie adressiert ist, auch relevant ist. Dieses Verfahren bewirkt eine besonders hohe Effizienz, wenn wahrscheinlich an einige der Abnehmergruppen keine Nachricht versendet wird, weil die Mitteilung für die Abnehmer dieser Abnehmergruppen irrelevant ist.

Bevorzugt registriert der Anbieter die Häufigkeit von Inanspruchnahmen etwa der Dienste x, y, z durch die Abnehmer 1 bis 250 fortlaufend in seinem Verzeichnis.

Inanspruchnahmen, die beispielsweise älter als ein Jahr sind, löscht der Anbieter aus dem Verzeichnis, um zu gewährleisten, dass die eingetragenen Häufigkeiten von Inanspruchnahmen ein aktuelles Inanspruchnahmeverhalten widerspiegeln, das eine besonders zuverlässige Prognose für ein zukünftiges Inanspruchnahmeverhalten ermöglicht und gewährleistet, dass eine erneute erfindungsgemäße Einteilung der Abnehmer in Abnehmergruppen zu einer weiteren Effizienzsteigerung führt.

## Patentansprüche

1. Verfahren zum Adressieren von Mitteilungen bezüglich mehrerer Dienste (x, y, z) eines Dienstanbieters an Abnehmer (1, ...,250) von Diensten (x, y, z) des Dienstanbieters, mit den Schritten:
- Einteilen der Abnehmer (1,...,250) in Abnehmergruppen (G11,...,G20), die jeweils mittels einer Abnehmergruppenadresse bezeichnet sind, und
- Adressieren einer Mitteilung an alle Abnehmer einer Abnehmergruppe (G11,...,G20),
**dadurch gekennzeichnet, dass** für jeden Abnehmer (1,...,250) Relevanzwerte bezüglich der verschiedenen Dienste (x, y, z) ermittelt werden und das Einteilen der Abnehmer (1,...,250) in Abnehmergruppen (G11,...,G20) in Abhängigkeit der jeweils ermittelten Relevanzwerte erfolgt.

2. Verfahren nach dem vorstehenden Anspruch,
**dadurch gekennzeichnet, dass** die Relevanzwerte bezüglich der verschiedenen Dienste (x, y, z) für jeden Abnehmer (1,...,250) in Abhängigkeit der Häufigkeit ermittelt werden, mit der die verschiedenen Dienste (x, y, z) von dem Abnehmer (1,...,250) in Anspruch genommen sind.

3. Verfahren nach einem der vorstehenden Ansprüche,
**dadurch gekennzeichnet, dass** die Relevanzwerte bezüglich der verschiedenen Dienste für jeden Abnehmer (1,...,250) in Abhängigkeit eines Nutzungsprofils des jeweiligen Abnehmers (1,...,250) ermittelt werden, in dem bezüglich einer vorgegebenen Auswahl von Diensten (x, y, z) die Häufigkeit festgehalten ist, mit der diese Dienste (x, y, z) von dem Abnehmer (1,...,250) in Anspruch genommen sind.

4. Verfahren nach dem vorstehenden Anspruch,
**dadurch gekennzeichnet, dass** Abnehmer (1,...,250) mit ähnlichem, insbesondere gleichem, Nutzungsprofil der gleichen Abnehmergruppe (G11,...,G20) zugeordnet werden.

5. Verfahren nach einem der vorstehenden Ansprüche,
**dadurch gekennzeichnet, dass** die Relevanzwerte bezüglich eines vorgegebenen Zeitraums vor dem Zeitpunkt ermittelt werden, zu dem die Ermittlung stattfindet.

6. Verfahren nach dem vorstehenden Anspruch,
**dadurch gekennzeichnet, dass** beim Ermitteln der Relevanzwerte bezüglich des vorgegebenen Zeitraumes ein jüngerer Abschnitt des Zeitraums stärker berücksichtigt wird als ein älterer Abschnitt des Zeitraums.

7. Verfahren nach einem der vorstehenden Ansprüche,
**dadurch gekennzeichnet, dass** die Abnehmer (26, 230) anhand der Relevanzwerte bezüglich der Dienste (x, y, z) derart in die Abnehmergruppen (G11,...,G20) eingeteilt werden, dass eine Zahl von Abnehmergruppen (G20) mit Abnehmern maximiert ist, für die die Mitteilung bezüglich eines vorgegebenen Dienstes (x, y, z) irrelevant ist.

8. Verfahren nach dem vorstehenden Anspruch,
**dadurch gekennzeichnet, dass** die Abnehmer anhand der Relevanzwerte bezüglich der Dienste (x; y; z) derart in die Abnehmergruppen (G11,...,G20) eingeteilt werden, dass in denjenigen Abnehmergruppen (G11; G13; G16) mit Abnehmern (4, 5, 38, 247; 27; 50), für die die Mitteilung bezüglich des vorgegebenen Dienstes (x; y; z) relevant ist, eine Summe der Relevanzwerte bezüglich des vorgegebenen Dienstes maximiert ist.

9. Verfahren nach einem der vorstehenden Ansprüche,
**dadurch gekennzeichnet, dass** die Abnehmer anhand der Relevanzwerte bezüglich der verschiedenen Dienste (x, y, z) derart in die Abnehmergruppen (G11,...,G20) eingeteilt werden, dass eine Wahrscheinlichkeit maximiert ist, wonach die Mitteilung bezüglich eines vorgegebenen Dienstes (x, y, z) für jeden Abnehmer (4, 5, 38, 247; 27; 50) in der Abnehmergruppe (G11, G13, G16) relevant ist.

10. Verfahren nach einem der vorstehenden Ansprüche,
**dadurch gekennzeichnet, dass** für jeden Abnehmer (1,...,250) die Adresse derjenigen Abnehmergruppe (G11,...,G20), der der Abnehmer (1,...,250) gegenwärtig zugeordnet ist, ferner gegebenenfalls die Adresse derjenigen Abnehmergruppe (G1,...,G10), der der Abnehmer (1,...,250) zuvor zugeordnet war, und die Relevanzwerte des Abnehmers (1,...,250) bezüglich der verschiedenen Dienste (x, y, z) in ein Verzeichnis eingetragen werden.

11. Rechteverwaltungsvorrichtung zum Verwalten von Rechten mehrerer Abnehmer (1,...,250) zur Inanspruchnahme verschiedener Dienste (x, y, z), mit einer Datenverarbeitungseinrichtung mit einer Ein-/Ausgabeschnittstelle und einer mit der Datenverarbeitungseinrichtung verbundenen Speichereinrichtung, **dadurch gekennzeichnet, dass** in der Speichereinrichtung ein Datenverarbeitungsprogramm zum Durchführen eines Verfahrens nach einem der vorstehenden Ansprüche gespeichert ist und die Datenverarbeitungseinrichtung zum Verarbeiten von Daten gemäß dem Datenverarbeitungsprogramm vorgesehen ist.

12. Sicherheitsvorrichtung zum Entschlüsseln verschlüsselter Daten bezüglich eines Dienstes (x, y, z), mit einer Speichereinrichtung zum Speichern einer Abnehmeradresse sowie eines Schlüssels, einem Anschluss zur Aufnahme der verschlüsselten Daten sowie zur Ausgabe entschlüsselter Daten, einer Datenverarbeitungseinrichtung zum Entschlüsseln der verschlüsselten Daten mittels des Schlüssels, um die entschlüsselten Daten zu erhalten, sofern die verschlüsselten Daten mit der Abnehmeradresse versehen sind,
**dadurch gekennzeichnet, dass** die Speichereinrichtung zum Speichern mindestens einer zweiten Abnehmeradresse ausgebildet ist, und dass die Datenverarbeitungseinrichtung zum Entschlüsseln der verschlüsselten Daten mittels des Schlüssels vorgesehen ist, sofern die verschlüsselten Daten mit der zweiten Abnehmeradresse versehen sind.

13. System zum Anbieten von Diensten an mehrere Abnehmer (1,...,250) miteiner Dienststation zum Bereitstellen der Dienste (x, y, z), einem Übertragungsnetz zum Übertragen der bereitgestellten Dienste (x, y, z) an Zugriffsmodule der mehreren Abnehmer (1,...,250), die zur Aufnahme einer Sicherheitsvorrichtung nach Anspruch 12 zum Entschlüsseln verschlüsselter Daten bezüglich der Dienste (x, y, z) vorgesehen sind, und einer Rechteverwaltungsvorrichtung nach Anspruch 11, das zum Verwalten von Rechten der Abnehmer zur Inanspruchnahme der Dienste (x, y, z) vorgesehen ist.

14. Digitales Speichermedium, insbesondere Festplatte, mit elektronisch auslesbaren Steuersignalen, die so mit einem System zum Anbieten von Diensten (x, y, z) an verschiedene Abnehmer zusammenwirken können, dass ein Verfahren nach einem der Ansprüche 1 bis 10 ausgeführt wird.

15. Computerprogrammprodukt mit auf einem maschinenlesbaren Träger gespeichertem Programmcode zum Durchführen des Verfahrens nach einem der Ansprüche 1 bis 10, wenn das Computerprogrammprodukt auf einem Rechner abläuft.

16. Computerprogramm, mit Programmcode zum Durchführen des Verfahrens nach einem der Ansprüche 1 bis 10, wenn das Programm auf einem Computer abläuft.
